Europäisches Patentamt

European Patent Office

Office européen des brevets

(19)

(11) Veröffentlichungsnummer: **0 291 693 B1**

(12) # EUROPÄISCHE PATENTSCHRIFT

(45) Veröffentlichungstag der Patentschrift: **18.09.91**

(51) Int. Cl.⁵: **H04N 5/93**

(21) Anmeldenummer: **88105946.3**

(22) Anmeldetag: **14.04.88**

(54) **Videogerät mit einem abtastbaren Aufzeichnungsträger.**

(30) Priorität: **18.04.87 DE 3713225**

(43) Veröffentlichungstag der Anmeldung:
**23.11.88 Patentblatt 88/47**

(45) Bekanntmachung des Hinweises auf die
Patenterteilung:
**18.09.91 Patentblatt 91/38**

(84) Benannte Vertragsstaaten:
**DE FR GB IT NL**

(56) Entgegenhaltungen:
**EP-A- 0 077 010**
**EP-A- 0 208 121**
**DE-A- 3 040 059**
**DE-A- 3 218 264**
**DE-C- 3 612 266**

(73) Patentinhaber: **Nokia Unterhaltungselektronik
(Deutschland) GmbH
Östliche Karl-Friedrich-Strasse 132
W-7530 Pforzheim(DE)**

(72) Erfinder: **Reime, Gerd
Kelterstrasse 39a
W-7131 Wurmberg(DE)**

## Beschreibung

Die Erfindung betrifft ein Videogerät der im Oberbegriff des Anspruches 1 angegebenen Art. Ein derartiges Videogerät ist beispielsweise aus der DE-A-26 31 335 bekannt. Bei dem bekannten Videogerät wird die Leuchtdichte der zeilenweise auf ein Magnetband aufzuzeichnenden Videobilder vor der Aufzeichnung in eine Frequenzmodulation umgewandelt. Die auf den Aufzeichnungsträger aufgezeichneten frequenzmodulierten Videosignale werden bei dem bekannten Gerät mittels eines Abtastkopfes abgetastet und in einem Frequenzdemodulator in abbildbare Leuchtdichtesignale umgewandelt, d.h. in Leuchtdichtesignale, die einen Bildschirm unmittelbar steuern und so auf dem Bildschirm in ein Videobild umgesetzt werden. Besondere Schaltungsmaßnahmen sollen bei dem bekannten Gerät verhindern, daß an einer senkrechten Kante hoher Leuchtdichteänderung eine Leuchtdichteumkehr stattfindet. Die Gefahr einer derartigen Inversion tritt vor allem durch die Anhebung der Bildsignale in einer Deemphasis-Schaltung vor der Frequenzmodulation auf.

Diese Schaltungsmaßnahmen können jedoch nicht verhindern, daß an diesen Kanten weiterhin eine Kantenunschärfe besteht. Der große Leuchtdichtesprung an der Kante erzeugt bei der Zerlegung des analogen Signales ein breites Frequenzspektrum, das von dem frequenzmäßig begrenzten Übertragungsweg für das Videosignal erheblich eingeschränkt wird. Der Leuchtdichtesprung wird deshalb im Laufe seiner Übertragung erheblich verzerrt. Im analogen Übertragungsweg wird diese Verzerrung häufig dadurch kompensiert, daß aus einer zweifachen Differentiation der verzerrten Sprungkante ein Kompensationssignal gebildet wird, das dem Analogsignal an der Sprungkante entsprechend zugesetzt wird. Eine derartige Kompensation erfordert jedoch einen verhältnismäßig hohen Aufwand.

Der Erfindung liegt die Aufgabe zugrunde, eine derartige Kompensation bereits am frequenzmodulierten Leuchtdichtesignal durchzuführen. Diese Aufgabe wird durch die im Anspruch 1 angegebenen Maßnahmen gelöst.

Bei einer Kompensation nach der Erfindung wird in vorteilhafter Weise das Rauschen im Signalweg nicht erhöht. Im Gegensatz dazu ist mit den analogen Kompensationsverfahren eine wesentliche Erhöhung des Rauschens im Signalweg verbunden. Außerdem hat sich herausgestellt, daß die Kompensationsmaßnahmen nach der Erfindung gleichzeitig eine Laufzeitkorrektur bewirken, die die Reflexionen an den senkrechten Leuchtdichtekanten wesentlich verringern.

Durch Verzerrungen der Leuchtdichtekanten infolge von Frequenz- und Phasenfehlern der Signalwege können an den senkrechten Leuchtdichtekanten Amplitudeneinbrüche im frequenzmodulierten Leuchtdichtesignal auftreten. Diese Amplitudeneinbrüche können bei den analogen Kompensationsverfahren zu störenden "Flitzern" an den Leuchtdichtekanten verstärkt werden. Bei einer erfindungsgemäßen Kompensation der Leuchtdichtekanten wird bei einem Amplitudeneinbruch, der zu "Flitzern" führen kann, die Kompensation ausgesetzt, sodaß dadurch die Bildung von Flitzern vermieden wird.

Die abhängigere Ansprüche kennzeichnen besonders vorteilhafte Ausgestaltungen der Erfindung.

Die Erfindung wird nachfolgend anhand eines vorteilhaften Ausführungsbeispieles näher erläutert. In der zugehörigen Zeichnung zeigen

Fig. 1    den Signalweg für das von einem Aufzeichnungsträger abgetastete frequenzmodulierte Leuchtdichtesignal in einem Videogerät,

Fig. 2    eine Flankenverzögerungsschaltung,

Fig. 3    Signaldiagramme a) bis e) zur Erläuterung des Signalgeschehens zu dem in Fig. 1 dargestellten Signalweg.

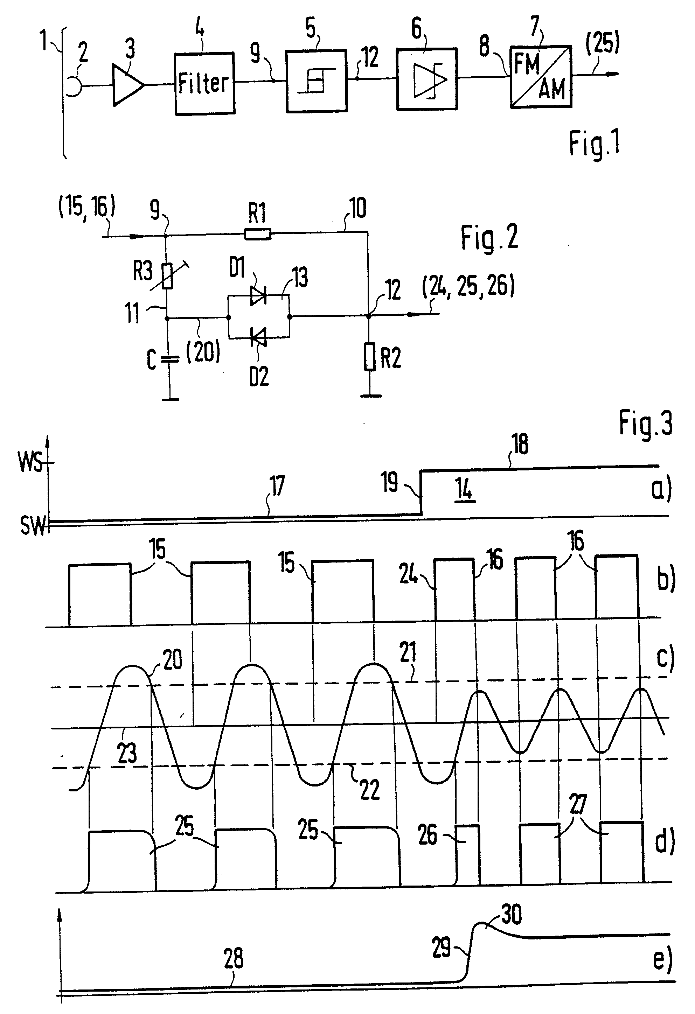

In Fig 1 ist der Signalweg für ein frequenzmoduliertes Leuchtdichtesignal eines Videogerätes dargestellt, das auf einem Aufzeichnungsträger 1 aufgezeichnet ist und das mit einem Abtastkopf 2 des Videogerätes von dem Aufzeichnungsträger abgetastet und auf den Signalweg gegeben wird. Das frequenzmodulierte Leuchtdichtesignal durchläuft auf dem Signalweg einen Kopfverstärker 3, eine Filterschaltung 4, eine selektive Flankenverzögerungsschaltung 5, einen Begrenzerverstärker 6 und gelangt danach an den Eingang 8 eines Frequenzdemodulators 7, in dem das frequenzmodulierte Leuchtdichtesignal in ein amplitudenmoduliertes Leuchtdichtesignal umgesetzt wird.

In Fig. 2 ist ein besonders einfaches Ausführungsbeispiel einer selektiven Flankenverzögerungsschaltung 5 dargestellt, die an beliebiger Stelle zwischen dem Ausgang eines nicht in der Zeichnung dargestellten Frequenzmodulators und einem ebenfalls nicht näher dargestellten Aufsprechverstärker oder dem Ausgang des Kopfverstärkers 3 und dem Eingang 8 des Frequenzdemodulators 7 im Signalweg angeordnet sein kann. Der Eingang 9 der frequenzselektiven Flankenverzögerungsschaltung 5 ist eine Parallelschaltung des Eingangs eines Spannungsteilers 10, der aus den Widerständen R1 und R2 gebildet ist, und außerdem des Eingangs eines Tiefpasses 11, der aus einem Längswiderstand R3 und einem Ableitkondensator C gebildet ist. Zwischen den Ausgang des Spannungsteilers 10, der gleichzeitig der Ausgang 12 der frequenzselektiven Flankenverzögerungsschaltung 5 ist, und den Ausgang des Tiefpasses ist ein Schwellwertschalter 13 geschaltet, der aus zwei antiparallel geschalteten Dioden D1 und D2 besteht. Der Schwellwertschalter 13 leitet nur solche Signale vom Ausgang des Tiefpasses 11 an den Ausgang der Flankenverzögerungsschaltung 5, die einer Schwingung eines Schwarzwertes angehören, deren Amplitude infolgedessen größer als der Schwellwert der Dioden D1 oder D2 bezogen auf die Ausgangsspannung der Flankenverzögerungsschaltung 5 ist.

Anhand der Diagramme a) bis e) der Fig. 3 wird die Wirkungsweise des Signalweges der Fig. 1 näher erläutert. Die Kurve 14 im Diagramm a) stellt einen Leuchtdichteverlauf eines Abschnittes einer Zeile eines Videobildes dar, dessen Verlauf in eine Frequenzmodulation umgewandelt ist. Jede Leuchtdichte ist durch eine bestimmte Impulsfrequenz dargestellt. Die zugehörigen Impulse 15 und 16 sind im Diagramm b) schematisch dargestellt. Einer Leuchtdichte 17 nahezu schwarz im Diagramm a) entspricht die verhältnismäßig niedere Frequenz der Impulsreihe 15. Einer Leuchtdichte 18 nahezu weiß im Diagramm a) entspricht die verhältnismäßig hohe Frequenz der Impulse 16. Zwischen den beiden Leuchtdichten 17 und 18 im Diagramm a) befindet sich ein Leuchtdichtesprung 19, der durch die sprunghafte Frequenzänderung zwischen dem Ende der Impulsreihe der Impulse 15 und dem Anfang der Impulsreihe der Impulse 16 gekennzeichnet ist. Die Impulse 15 und 16 befinden sich auf dem Datenträger 1 und werden vom Abtastkopf 2 abgetastet und über die Schaltungen 3 und 4 dem Eingang 9 der frequenzselektiven Flankenverzögerungsschaltung 5 zugeführt. Von dort gelangen sie über den Spannungsteiler 10 spannungsreduziert an den Ausgang 12 der Flankenverzögerungsschaltung 5. Gleichzeitig gelangen sie an den Tiefpaß 11, der so eingestellt ist, daß die Impulsschwingungen, die den Bereich des Schwarzwertes der Leuchtdichte kennzeichnen, mit einer großen Amplitude den Tiefpaß verlassen und vom Schwellwertschalter 13 durchgelassen werden, und die Schwingungen, die den Bereich nach dem Weißwert hin kennzeichnen, den Tiefpaß mit einer kleinen Amplitude verlassen und nicht mehr den Schwellwertschalter 13 passieren können. Diese Schwingungen am Ausgang des Tiefpasses sind durch die Kurve 20 im Diagramm c) dargestellt. Die gestrichelten Linien 21 und 22 im Diagramm c) stellen die Schwellwerte für die positive und die negative Halbwelle des Schwingungszuges 20 dar, der um einen durch die Linie 23 dargestellten Mittelwert schwingt. Solange diese Ausgangsschwingung 20 die Linien 21 und 22 für den Schwellwert des Schwellwertschalters 13 überschreiten, werden die Ausgangssignale des Tiefpasses 11 den über den Spannungsteiler 10 an den Ausgang 12 der Flankenverzögerungsschaltung übertragenen Signalen 15 und 16 überlagert, so daß die impulsförmigen Ausgangssignale 24, 25 und 26 am Ausgang der frequenzselektiven Flankenverzögerungsschaltung 5 entstehen.

Die Überlagerung der Signale vom Tiefpaß 11 mit den Signalen am Ausgang 12 der Flankenverzögerungsschaltung bewirkt eine Verzögerung der Vorderflanken und der Rückflanken der Impulse 15 und eine dementsprechende Verzögerung der Vorderflanke 24 des ersten Impulses 16 der Impulsreihe für die Leuchtdichte 18, während dessen Rückflanke und die Flanken der anderen Impulse 16 nicht verzögert werden. Dadurch entstehen am Ausgang 12 der Flankenverzögerungsschaltung 5 drei Arten von Signalen, nämlich die gegenüber den Eingangsimpulsen 15 verzögerten Ausgangsimpulse 25, dann die gegenüber den Eingangsimpulsen 16 unverzögerten und in der Impulsbreite unveränderten Impulse 27 und schließlich ein zwischen diesen beiden Impulsreihen liegender, gegenüber dem ersten Impuls 16 der Impulsreihe für die Leuchtdichte 18 in der Impulsbreite verkleinerter Impuls 26, der eine wesentlich höhere Leuchtdichte darstellt als die Impulse 27. Der Frequenzdemodulator 7, der die mit den Impulsen 25, 26 und 27 frequenzdemodulierten Leuchtdichtesignale wieder in ein analoges, durch die Kurve 28 im Diagramm e) dargestelltes Leuchtdichtesignal umwandelt, erzeugt an der Stelle des verkleinerten Ausgangsimpulses 26 der Flankenverzögerungsschaltung 5 einen Leuchtdichtesprung 29 mit einem Überschwinger 30. Dieser Überschwinger 30 ist so bemessen, daß er die Verzerrung der Leuchtdichtekante 19 des Leuchtdichteverlaufes 17 und 18 im wesentlichen kompensiert.

Wird dagegen die Impulspause zwischen den beiden Impulsreihen der Impulse 27 und Impulse 25 erhöht, was bei einem in der Zeichnung nicht näher dargestellten, zur Sprungkante 19 in umgekehrter Richtung verlaufenden Leuchtdichtesprung auftritt, wird dadurch für den FM-Demodulator ein erhöhter Schwarzwert dargestellt. Der FM-Demodulator erzeugt an dieser Stelle einen Unterschwinger, der an dieser Stelle den verzerrten Leuchtdichtesprung vom Weißbereich WS in den Schwarzwert SW kompensiert.

## Patentansprüche

1.  Videogerät mit einem abtastbaren Aufzeichnungsträger, auf dem die Leuchtdichte von Videobildern bildzeilenweise in einer Frequenzmodulation aufgezeichnet und mittels eines Abtastkopfes abtastbar und anschließend in einem Frequenzdemodulator in abbildbare Leuchtdichtesignale rückwandelbar ist, **dadurch gekennzeichnet,** daß zwischen dem Abtastkopf (2) und dem Frequenzdemodulator (7) eine frequenzselektive Flankenverzögerungsschaltung (5) angeordnet ist, die die Flanken (24) der Schwingungen (15) im FM-Bereich für die schwarzen Anteile (17) der abgetasteten Leuchtdichtezeile (14) um weniger als die Breite einer Halbwelle (16) der Schwingungen für den Weißwert der Leuchtdichte verzögert.

2. Videogerät nach Anspruch 1, dadurch gekennzeichnet, daß die frequenzselektive Flankenverzögerungsschaltung (5) einen Spannungsteiler (10) enthält, zwischen dessen Eingang (9) und dessen Ausgang (12) die Serienschaltung eines Tiefpasses (11) für den Schwarzwert der Leuchtdichte kennzeichnende Schwingungen (15) und eines Schwellwertschalters (13) geschaltet ist, der die Ausgangssignale des Tiefpasses für die hellen Leuchtdichtewerte sperrt.

3. Videogerät nach Anspruch 2, dadurch gekennzeichnet, daß der Tiefpaß (11) aus einem Längswiderstand (R3) und einem Ableitkondensator (C) und der Schwellwertschalter (13) aus wenigstens zwei antiparallel geschalteten und mit je einem Schwellwert behafteten Dioden (D1, D2) besteht.

**Claims**

1. Video device with a scannable record carrier on which the luminance information of video pictures is recorded line by line using frequency modulation and is scannable by means of a playback head, the scanned luminance information being subsequently reconvertible into reproducible luminance signals in an FM detector,
characterized in that between the playback head (2) and the FM detector (7) a frequency-selective edge delay circuit (5) is inserted which delays the edges of the pulses (15) in the FM range for the black components (17) of the scanned luminance line (14) by less than the width of one (16) of the pulses for the white level of the luminance.

2. A video device as claimed in claim 1, characterized in that the frequency-selective edge delay circuit (5) contains a voltage divider (10) having the series combination of a low-pass filter (11) for pulses (15) characterizing the black level of the luminance and a threshold switch (13) connected between its input (9) and its output (12), the threshold switch (13) blocking the output signals of the low-pass filter for the bright luminance values.

3. A video device as claimed in claim 2, characterized in that the low-pass filter (11) consists of a resistor (R3) in series with a bypass capacitor (C), and that the threshold switch (13) consists of at least two diodes (DI, D2) each associated with a treshold value connected in inverse parallel.

**Revendications**

1. Appareil vidéo avec un support d'enregistrement balayable sur lequel est enregistrée la luminance d'images vidéo par ligne de balayage en modulation de fréquence, balayée moyennant une tête de balayage et ensuite transformée dans un démodulateur de fréquences en signaux de luminance pouvant être visualisés,
caractérisé en ce que entre la tête de balayage (2) et le démodulateur de fréquences (7) est logé un circuit de retard sélectif en fréquence (5) temporisant les flancs (24) des ondulations (15) dans la plage M.F. pour les fractions noires (17) de la ligne de luminance balayée (14) de moins d'une largeur de demi-onde (16) des ondulations pour le niveau du blanc de la luminance.

2. Appareil vidéo selon la revendication 1, caractérisé en ce que le circuit de retard sélectif en fréquence (5) comprend un diviseur de tension (10), entre l'entrée (9) et la sortie (12) duquel est monté le circuit en série d'un filtre passe-bas (11) pour le niveau du noir pour les ondulations (15) caractérisant la luminance et un commutateur-seuil (13) bloquant les signaux de sortie du filtre passe-bas pour les valeurs de luminance claires.

3. Appareil vidéo selon la revendication 2, caractérisé en ce que le filtre passe-bas (11) se compose d'une résistance en série (R3) et d'un condensateur en dérivation (C) et le commutateur-seuil (13) d'au moins deux diodes (DI, D2) montées en antiparallèle et contenant chacune un seuil.

Fig.1

Fig.2

Fig.3